# EUROPEAN PATENT APPLICATION

(11) **EP 1 868 133 A2**
(43) Date of publication of application: **19.12.2007**
(21) Application number: 07110095.2
(22) Date of filing: 12.06.2007
(51) Int. Cl.: G06F 21/24

(54) **Systems and methods for scheduling a device**

(30) Priority: 13.06.2006 US 451317
(71) Applicant: Xerox Corporation, Rochester, New York 14644 (US)
(72) Inventor: Rouhana, Fadi G., Fairport, NY 14450 (US); Kovnat, Larry A., Rochester, NY 14623 (US); Bunker, Keith G., Hilton, NY 14468 (US)
(74) Representative: Grünecker, Kinkeldey, Stockmair & Schwanhäusser Anwaltssozietät

(57) **Abstract**

An embodiment generally relates a method for scheduling for a device. The method includes receiving at least one parameter related to an initiation of an overwrite operation and determining a temporal start based on the at least one parameter. The method also includes storing the temporal start and initiating the overwrite operation in response to a timer matching the temporal start.

## Description

### FIELD

This invention relates generally to devices, more particularly, systems and methods for scheduling an operation on the device.

### DESCRIPTION OF THE RELATED ART

Many photocopiers, printers, and other reproduction and printing devices now include non-volatile memory (NVM), such as magnetic and optical storage media and including removable disk systems, hard drives, and other storage media systems allowing the device and/or a user to store a job the device uses (or is directed to use the stored job). In high security areas (e.g., military installations), there is often a requirement that all jobs that are stored on NVM of a device shall be inaccessible once the job is completed. Additionally, users in lower security areas often wish to erase data they would like to keep private or confidential for various reasons.

It may be agreed that to be written with patterns of 1 s, Os or random combination thereof are a secure way to ensure the data cannot be recovered. However, government agencies and other customers have different requirements as to how many times one can overwrite the appropriate portions of NVM once a job or task is completed, which can lead to difficulties in product design and implementation.

On solution for a multifunctional device with NVM that can be used in various security scenarios is described in U.S. Patent No. 6,731,447, commonly assigned Assignee, Xerox Corporation, which is hereby incorporated by reference in its entirety. The described multifunctional device permits a customer to program the type of the patterns to be overwritten as well as the number of cycles of pattern. However, this solution also has drawbacks and disadvantages. For example, the overwrite operation may take long period of times to complete the programmed operation, which makes the multi-functional device unavailable. Moreover, the overwrite operation had to be initiated at the multi-functional device. Some customer sites may have numerous multi-functional devices scattered through a secure facility. Accordingly, a solution may be needed to increase availability of the multi-functional device as well as improving efficiency of initiating the overwrite operations.

SUMMARY

An embodiment generally relates to a method for scheduling for a device. The method includes receiving at least one parameter related to an initiation of an overwrite operation and determining a temporal start based on the at least one parameter. The method also includes storing the temporal start and initiating the overwrite operation in response to a timer matching the temporal start.
The invention also relates to an apparatus comprising means for performing the method of any of claims 1 to 9.
The invention further relates to a computer readable medium comprising executable code for performing the method of claim 1.

Another embodiment pertains generally to a system for scheduling an overwrite operation on a device. The system includes a processor configured to execute functionality of the device and a storage medium configured to store data and interface with the processor. The system also includes an on-demand module configured to be executed by the processor that initiates an overwrite operation on the storage medium. The on-demand module is also configured to display a first user interface configured to access the on-demand and to display a second user interface configured to receive at least one parameter that determines the initiation of the overwrite operation. The on-demand module may also be configured to execute the overwrite operation according to the at least one parameter.
In a further embodiment the at least one parameter is one of a start time value, a date start value, and a recurrence value.
In a further embodiment the overwrite module is further configured to determine a temporal start based on the start time value, the data start value and the recurrence value.
In a further embodiment the system further comprises a timer configured to provide a date and a time, wherein the overwrite module is further configured to initiate the overwrite operation in response to the timer matching the temporal start.
In a further embodiment in the overwrite module is further configured to request authentication information to access the overwrite operation and to verify the authentication information.
In a further embodiment the system further comprises:
a network configured to provide a communication channel and interface with the device; and
a remote computer configured to access the device over the network; wherein the remote computer accesses properties associated with the device through a graphic image representation of the device.
In a further embodiment the overwrite module is configured to display a list of properties associated with the device on the remote computer in response to an activation of the graphic representation of the device.
In a further embodiment the overwrite module is configured to request authentication information in response to activating a property on the list of properties.
In a further embodiment the overwrite module may be configured to display the scheduling interface in response to a positive confirmation of the requested authentication information.

### BRIEF DESCRIPTION OF THE DRAWINGS

Various features of the embodiments can be more fully appreciated, as the same become better understood with reference to the following detailed description of the embodiments when considered in connection with the accompanying figures, in which:
FIG. 1 illustrates an exemplary embodiment of a system in accordance with an embodiment;
FIG. 2 illustrates an exemplary diagram of a multi-functional device in the system of FIG. 1 in accordance with another embodiment;
FIG. 3 illustrates an exemplary user interface implemented by a device in accordance with yet another embodiment;
FIGS. 4A-4D illustrates exemplary user interfaces implemented by the device in accordance with yet another embodiment;
FIG. 5 illustrates an exemplary flow diagram implemented by the device in accordance with yet another embodiment;
FIG. 6 illustrates another exemplary flow diagram implemented by the device in accordance with yet another embodiment; and
FIG. 7 illustrates yet another user interface in accordance with another embodiment.

### DETAILED DESCRIPTION OF EMBODIMENTS

For simplicity and illustrative purposes, the principles of the present invention are described by referring mainly to exemplary embodiments thereof. However, one of ordinary skill in the art would readily recognize that the same principles are equally applicable to, and can be implemented in, all types of network-capable devices with storage devices, and that any such variations do not depart from the true spirit and scope of the present invention. Moreover, in the following detailed description, references are made to the accompanying figures, which illustrate specific embodiments. Electrical, mechanical, logical and structural changes may be made to the embodiments without departing from the spirit and scope of the present invention. The following detailed description is, therefore, not to be taken in a limiting sense and the scope of the present invention is defined by the appended claims and their equivalents.

Embodiments generally relate to system and method for allowing users to automatically initiate an operation on a device at a user-specified time. More specifically, an on-demand module executing on a device may be configured to allow a user to program the start time, date and recurrence of the initiation of an existing operation (e.g. an overwrite operation) on the device.

In other embodiments, the on-demand module may be configured to be accessible over a network. More particularly, the device may be network accessible and be accessible to remote users using Simple Network Management Protocol (SNMP) or Hyper Text Transfer Protocol (HTTP) protocols. The device may have a graphical network representation (i.e., icon) that can be viewed by the remote user. The user may activate the device icon to access the on-demand module. The on-demand module may be configured to query the remote user for authentication information. If the remote user provides correct authentication information, the on-demand module may provide a user interface that accepts information to program the user-specified time for the initiation of the operation.

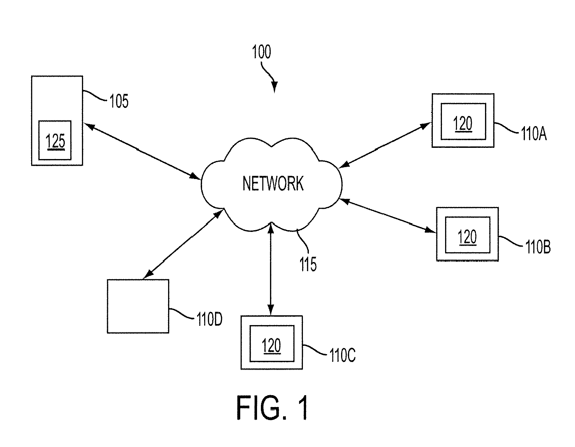

FIG. 1 illustrates an exemplary embodiment of a system 100 in accordance with an embodiment of the invention. It should be readily apparent to those of ordinary skill in the art that the system 100 depicted in FIG. 1 represents a generalized schematic illustration and that other components may be added or existing components may be removed or modified. Moreover, the components of the system 100 may be implemented in hardware, software, or combinations thereof as known to those skilled in the art.

As shown in FIG. 1, system 100 includes a server 105, devices 110A-D, and a network 115. The server 105 may be configured to manage the devices 110A-D. More specifically, the server 105 may allow a system administrator to manage traffic flow, diagnose devices, add or delete users to the devices 110A-D, and other similar administrative tasks using Simple Network Protocol Management (SNMP) protocol or hyper text transfer protocol (HTTP) protocol. The server 105 may implement or execute network management software such as Xerox Device Manager, CentreWare™ Web or other similar network management tool.

The device 110 may be a networked facsimile, photocopier, printer, scanner, or a combination thereof (i.e. a multi-functional device). The device 110A-C may be configured to operate with a non-volatile memory ("NVM", not shown) whereas device 110D does not include a NVM. The NVM may be a magnetic or optical storage media and including removable disk systems, hard drives, and other storage media systems allowing the device and/or a user to store a job the device uses or is directed to use the stored job. The devices 110A-C may also be configured with, among other programmable functions, an overwrite operation as described in U.S. Patent No. 6,731,447, commonly assigned Assignee, Xerox Corporation, which is hereby incorporated by reference.

The devices 110A-D may be configured to communicate with the server 105 over the network 115. The network 115 may be implemented as a local area network, wide area network or a combination thereof. The network 115 may be partially secure and/or fully secure. The network 115 may be implemented using network protocols such as IEEE 802.3X, IEEE 802.11X, token ring, or other similar network protocols.

In accordance with some embodiments, the devices 110A-C may be configured to execute an on-demand module 120 for those devices with a NVM. The on-demand module 120 may be configured to allow a user to program the start time, date and recurrence of the initiation of an existing operation (e.g. an overwrite operation) on the device.

In accordance with other embodiments, the server 105 may be configured to access the on-demand module 120 through a server access module 125. The server access module 125 may be configured to access the devices 110A-D using protocols such as SNMP. Each device 110 may have a graphical network representation (i.e., icon) that can be viewed by the user at server 105 using the network management software such as Xerox Device Manager. The user may activate the device icon to access the on-demand module 120 on a selected device 110A-D. The on-demand module 120 may be configured to query the remote user for authentication information. If the remote user provides correct authentication information, the on-demand module 120 may provide a user interface that accepts information to program the user-specified time for the initiation of an operation.

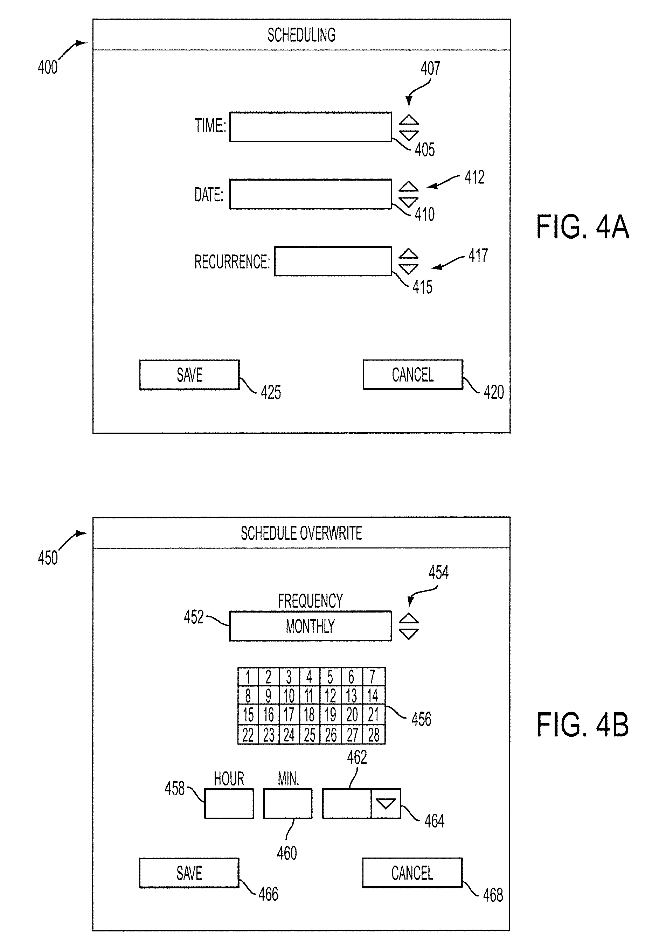

In other embodiments, the server access module 125 may be configured to access the devices 110A-D using protocols such as HTTP. Similar to the SNMP embodiment, each device 110 may have a graphical network representation (i.e., icon) that can be viewed by the user at server 105 using the network management software such as CentreWeb™ Web. The user may activate the device icon to access the on-demand module 120 on a selected device 110A-D. The on-demand module 120 may be configured to query the remote user for authentication information. If the remote user provides correct authentication information, the on-demand module 120 may provide a user interface that accepts information to program the user-specified time for the initiation of an operation as illustrated with respect to FIGS. 4B-D.

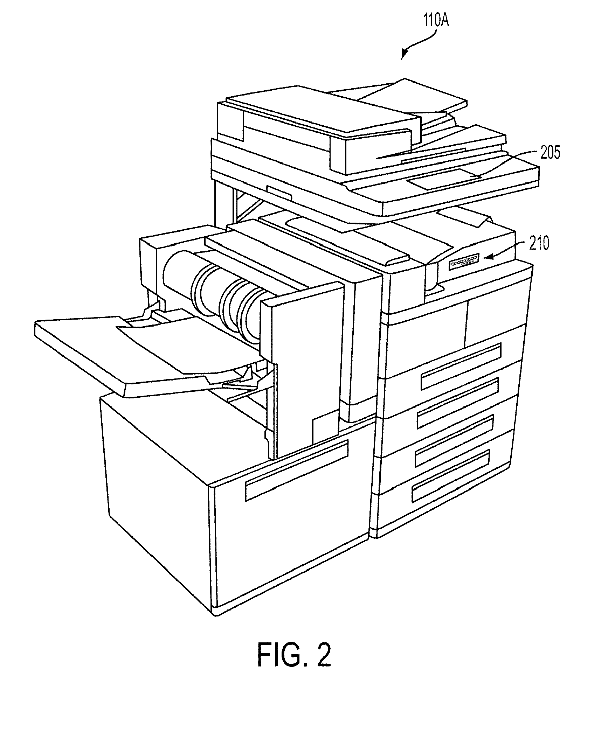

FIG. 2 illustrates an exemplary multi-functional device (MFD) 110A in the system 100. As shown in FIG. 2, the MFD 110A may be a scanner, printer, photocopier, or other device, having a non-volatile memory (NVM) 210, such as a magnetic or optical storage medium, to which the device 110A can store data and/or from which the device can read data stored in a data file. In embodiments, the device 110 can use the data to produce output, such as paper hard copy of a word processing document or the like.

Device 110A includes a user interface 205. The user interface 205 may be a liquid crystal display (LCD) configured to display parameters and/or instructions related to the operation of the device 110A. For example, the user interface 205 may display fields for a user to enter such as number of copies, to collate copies, reduce or enlarge copies, etc., as known to those skilled in the art.

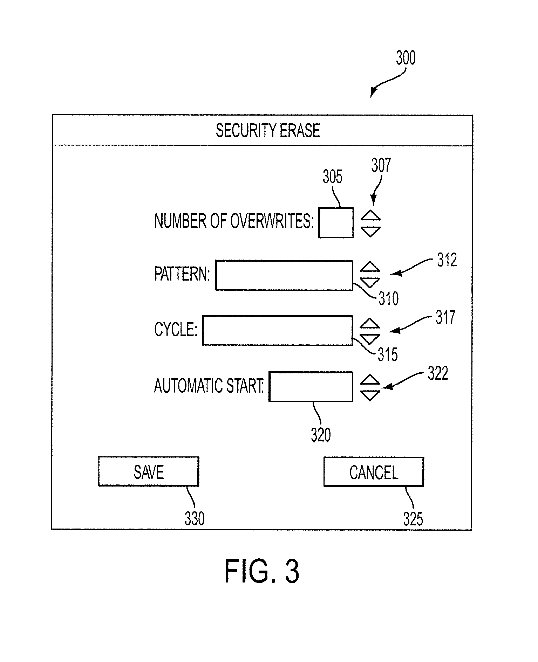

The user interface 205 may be configured to display a security erase interface as depicted in FIG. 3 in some embodiments. As shown in FIG. 3, the security erase interface 300 may be configured to set the parameters for an overwrite operation on the NVM 210 of the device 110A. More particularly, the overwrite operation writes patterns of 1 s, 0s, or random combinations over the data stored on the NVM 210. The parameters of the overwrite operation may be set by the security erase interface 300. Accordingly, the security erase interface 300 may be include a number of overwrites field 305, a pattern field 310, a cycle field 315, and an automatic start field 320.

The number of overwrites field 305 may be a parameter that signifies the number of times the overwrite operation occurs. More particularly, a user may use the scroll buttons 307 to set the value for this field 305 by incrementing/decrementing by one. A range of values for the number of overwrite field may be from one to ten. Accordingly, the on-demand module 120 may be configured to initiate the overwrite operation according to the value set this field 305. Other embodiments may increase or decrease the maximum number of overwrites.

The pattern field 310 may be a parameter that signifies what data the overwrite operation writes over the existing data on the NVM 210. More particularly, a user may scroll through the following values on the pattern field 310 using the scroll buttons 312: "ALL ONES", "ALL ZEROS", "RANDOM" or "TABLE." A selection of "ALL ONES" may indicate all ones will be used to overwrite the existing data on the NVM 210. A selection of "ALL ZEROS" may indicate all zeros will be used to overwrite the existing data on the NVM 210. A selection of "RANDOM" may indicate a random combination of one and zeros will be used to overwrite the existing data on the NVM 210. The on-demand module 120 may then execute overwrites using the selected value in the field 310.

A selection of "TABLE" may indicate that the system administrator set up a table of overwrite patterns for the device 110A. The cycle field 315 may represent the number of times that overwrite operation writes the table of overwrite patterns over the existing data on the NVM 210.

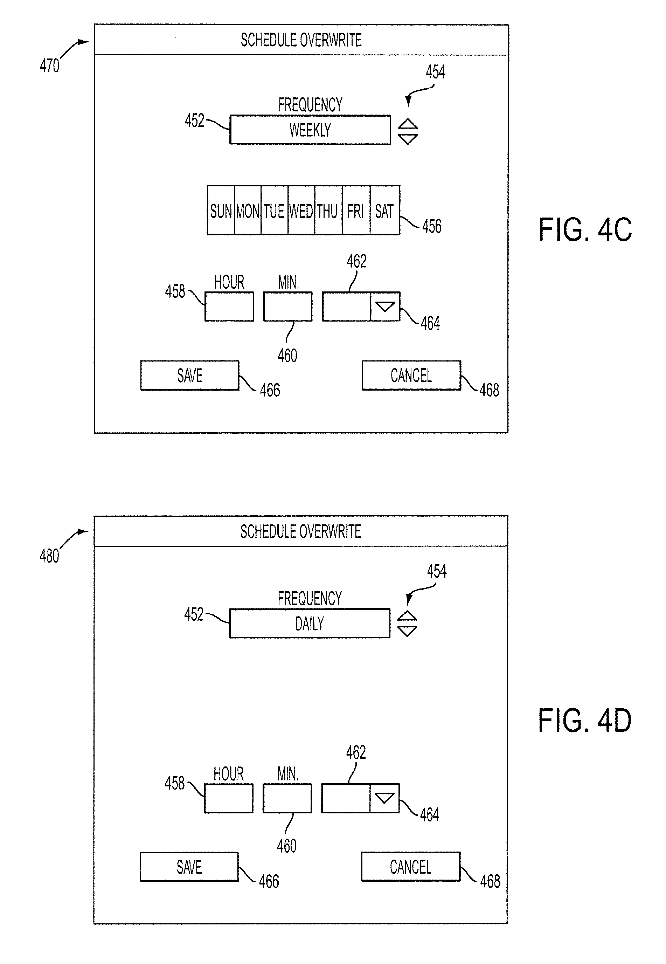

The automatic start field 310 may be a parameter that allows a user to program the overwrite operation to initiate or occur at a selected time. More specifically, a user may use the scroll buttons 322 to scroll through the values of "YES" or "NO". If the user sets the value of the automatic start field 320 to "NO", the overwrite operation may commence immediately according to the values set in the number of overwrites field 305, pattern field 310 and cycle field 315 when the user activates the save button 330. If the user sets the value of the automatic start field 320 to "YES", the on-demand module 120 may be configured to generate the user interface of FIG. 4 when the user activates the save button 330. If the user activates the cancel button 325, the user interface 205 may return to a default screen.

FIGS. 4A-D illustrates multiple scheduling user interfaces in accordance to various embodiments. FIG. 4A illustrates an exemplary scheduling interface 400 for the user interface 205 that is implemented by the on-demand module 120. It should be readily apparent to those of ordinary skill in the art that the scheduling interface 400 depicted in FIG. 4A represents a generalized schematic illustration and that other components may be added or existing components may be removed or modified.

As shown in FIG. 4A, the scheduling interface 400 may include a time field 405, a date field 410, and a recurrence field 415. The time field 405 may be a parameter that represents the start time for the overwrite operation to commence. A user may select the start time by using the scroll buttons 407. In some embodiments, the default value for the time field 405 may be the current time. The time may be provided the server 105 using SNMP or the device 110A may have an internal clock.

The date field 405 may be a parameter that represents a day in the future for the start of the overwrite operation. A user may select the start day by using the scroll buttons 412. In some embodiments, the default value for the date field may be the current date. Similar to the time field 405, the server 105 may provide a calendar or the device 11 10A may have an internal calendar.

The recurrence field 415 may be configured to represent a recurrence value for the start of the overwrite operation. More particularly, a user may scroll through the values, "DAILY", "WEEKLY" or MONTHLY", using the scroll buttons 417. If the user selects the "DAILY" value, the on-demand module 120 may be configured to initiate the overwrite operation at the value set in the time field 405. If the user selects the "WEEKLY" value, the on-demand module 120 may be configured to initiate the overwrite operation at day of the week for the value set in the date field 410. If the user selects the "MONTHLY" value, the on-demand module 120 may be configured to initiate the overwrite operation at the day of the month for the value set in the date field 410.

The values set in the above-mentioned fields (405, 410, 415) may be saved to the on-demand module 120 when the user activates the save button 425. Otherwise, the on-demand module 120 may return to the security erase interface 300 when the user activates the cancel button 420.

FIG. 4B illustrates a monthly scheduling interface 450 for the on-demand module 120 over HTTP protocol. As shown in FIG. 4B, the user interface 450 includes a properties box 452 and a schedule image overwrite box 454. The properties box 452 may be configured to allow a user to select between a manual or scheduled overwrites. The monthly schedule image overwrite box 454 may be configured to allow a user to select a frequency and time for the overwrite operation. More specifically, the disabling or enabling of the scheduled overwrite may be set by clicking on the disabled field 456 or the schedule overwrite field 458, respectively.

The schedule image overwrite box 454 also includes a frequency field 460 that allows a user to pick the frequency of the scheduled overwrite. More particularly, the values for this field may be "MONTHLY", "WEEKLY" or "DAILY". A user may scroll through these values by using the scroll buttons 462. For user interface 450, the value of "MONTHLY" is set in the frequency field 460. A selection of "WEEKLY in the frequency field 460 may display user interface 470 shown in FIG. 4C and a selection of "DAILY" in the frequency field 460 may display user interface 480 shown in FIG. 4D.

Returning to FIG. 4B, the monthly schedule overwrite box 454 may include a calendar field 464 which display a 28-day month. The user may select a day of the month for the scheduled overwrite to occur. The user may also set the time using an hour field 465, a minute field 466, and a before/after midday field 467. The user may save the setting of the day of the month and the time to start by activating an "APPLY" button 468 or return to a default screen by activating the "UNDO" button 469.

FIG. 4C illustrates an exemplary weekly scheduling interface 470 for the on-demand module 120 over HTTP protocol. FIG. 4C is similar to FIG. 4B and for the sake of brevity, the description of the common features in FIG. 4C is omitted and that the descriptions of these features with respect to the FIG. 4B is being relied upon to provide adequate descriptions of the common features.

As shown in FIG. 4C, the weekly scheduling interface 470 may have the frequency field 460 set to "WEEKLY." The calendar field 464 may be configured to display the days of the week for a user to select. The user may also set the time using an hour field 465, a minute field 466, and a before/after midday field 467. The user may save the setting of the day of the week and the time to start by activating an "APPLY" button 468 or return to a default screen by activating the "UNDO" button 469.

FIG. 4D illustrates an exemplary daily scheduling interface 480 for the on-demand module 120 over HTTP protocol. FIG. 4D is similar to FIGS. 4B-C and for the sake of brevity, the description of the common features in FIGS. 4B-C is omitted and that the descriptions of these features with respect to the FIGS. 4B-C are being relied upon to provide adequate descriptions of the common features.

As shown in FIG. 4C, the daily scheduling interface 470 may have the frequency field 460 set to "DAILY." The calendar field 464 is omitted in the daily scheduling interface 470 since the scheduled overwrite occurs every day. Instead, the user may set the time using an hour field 465, a minute field 466, and a before/after midday field 467. The user may save the setting of the time to start by activating an "APPLY" button 468 or return to a default screen by activating the "UNDO" button 469.

Accordingly, the on-demand module 120 may be configured to execute an overwrite operation or schedule the overwrite operation depending on the values set in the fields described with respect to FIGS. 3-4A-D. More specifically, a user may schedule an overwrite operation on a daily, weekly, or monthly basis at a selected time. Alternatively, the user may schedule a single overwrite operation on a specified date and time.

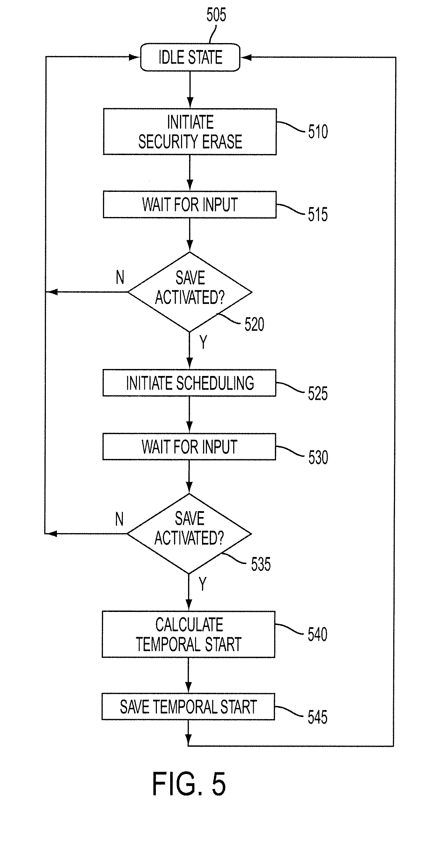

FIG. 5 illustrates an exemplary flow diagram 500 implemented by the on-demand module 120 in accordance with yet another embodiment. It should be readily apparent to those of ordinary skill in the art that the flow diagram 500 depicted in FIG. 5 represents a generalized illustration and that other steps may be added or existing steps may be removed or modified.

As shown in FIG. 5, the on-demand module 120 may be in idle state, in step 505. The on-demand module 120 may be invoked during boot-up of the device 110A.

In step 510, the on-demand module 120 may detect the initiation of the scheduling for an overwrite operation. More particularly, the on-demand module 120 may be configured to detect that a user has switched the user interface 205 to the security erase interface 400.

The on-demand module 120 may be configured to wait for input from the user, in step 515. More specifically, the on-demand module 120 may wait for the user to set the values in the fields associated with FIG. 3 and activate the save button 330.

If the on-demand module 120 detects the user activates the cancel button 335, the on-demand module 120 may return to the idle state of step 505. Otherwise if the on-demand module 120 determines that the user has activated the save button 330, in step 520, the on-demand module 120 may be configured to determine whether the automatic scheduling field 320 has been set to a value of "YES". If the value is set to "NO", the on-demand module 120 may be configured to initiate the overwrite operation according to the values set in the fields (305,310, and/or 315) as previously described with FIG. 3, in step 530.

Otherwise, if the automatic start field 320 is set to "YES" value, in step 525, the on-demand module 120 may be configured to display the scheduling interface 420, in step 535. The on-demand module 120 may be configured to wait for input from the user, in step 540. More specifically, the on-demand module 120 may wait for the user to set the values in the fields associated with FIG. 4 and activate the save button 425.

If the user activates the cancel button 420, in step 545, the on-demand module 120 may discard the values set in the fields associated with scheduling interface 400 and return to the security erase interface 300.

If the user activates the save button 425, in step 545, the on-demand module 120 may save the values set in the fields associated with scheduling interface 400 and calculate a temporal start, in step 550. The temporal start may include the start time, date and a recurrence value for the scheduled overwrite operation. Subsequently, the temporal start is stored by the on-demand module 120, in step 555.

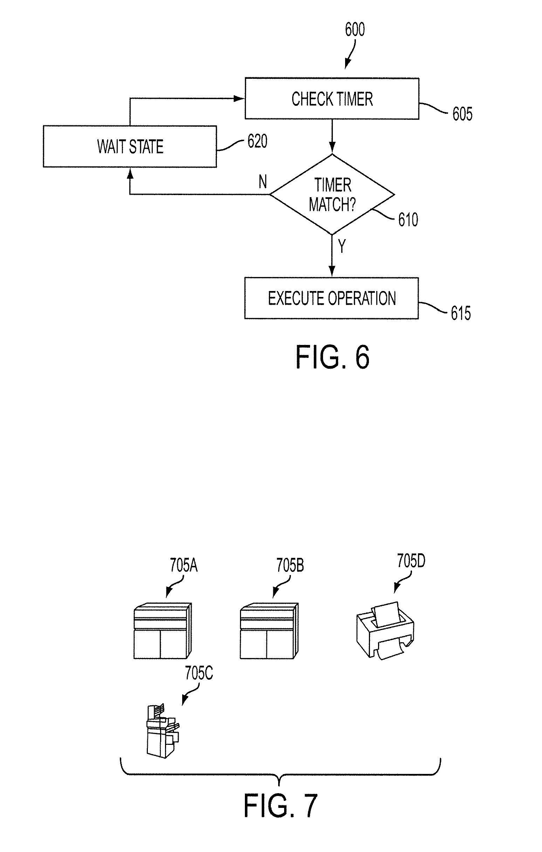

FIG. 6 illustrates another exemplary flow diagram 600 implemented by the on-demand module 120 in accordance with yet another embodiment. It should be readily apparent to those of ordinary skill in the art that the flow diagram 600 depicted in FIG. 6 represents a generalized illustration and that other steps may be added or existing steps may be removed or modified.

As shown in FIG. 6, the on-demand module 120 may be configured to check a timer, in step 605. More particularly, a device may maintain a clock and/or calendar. Alternatively, the on-demand module 120 may request for the time and/or date.

In step 610, the on-demand module 120 may be configured to check whether the value of the timer matches or exceed the temporal start value. If the timer does not match the temporal start value, the on-demand module 120 may be configured to enter a wait state, in step 620. The wait state provides a delay before requesting the next timer value. The wait state may be a user-specified value.

Otherwise, if the value of the timer matches or exceeds the temporal start value, the on-demand module 120 may be configured to execute the overwrite operation as specified by the user choice of values in the security erase interface 300.

FIG. 7 illustrates another exemplary network interface 700 executed by the server 105 shown in FIG. 1. It should be readily apparent to those of ordinary skill in the art that the network interface 700 depicted in FIG. 7 represents a generalized schematic illustration and that other network components may be added or existing components may be removed or modified.

As shown in FIG. 7, the network interface 700 may include graphical representations of devices 110A-D. Icon 705A-B may represent devices 110A-B, respectively, which may be multi-functional devices. As previously discussed, the multi-functional device may be a combination of scanner, photocopier, printer and facsimile machine. Icon 710 may represent device 110C as a high-speed laser printer. Icon 715 may represent device 110D as another printer.

In accordance with various embodiments, a system administrator (or another remote user) may activate the icon 705A with an input device such as a mouse. The icon 705A may display a user interface requesting the user to input authentication information. The authentication information may be a user name along with a personal identification number, password or other similar security token. If the authentication information is verified, the on-demand module 120 may be configured to display the security erase interface 300. The scheduling interface 400 may be invoked from the security erase interface 300 as previously described. Accordingly, a remote user may access all devices from a single location to schedule or initiate overwrite operations.

Certain embodiments may be performed as a computer program. The computer program may exist in a variety of forms both active and inactive. For example, the computer program can exist as software program(s) comprised of program instructions in source code, object code, executable code or other formats; firmware program(s); or hardware description language (HDL) files. Any of the above can be embodied on a computer readable medium, which include storage devices and signals, in compressed or uncompressed form. Exemplary computer readable storage devices include conventional computer system RAM (random access memory), ROM (read-only memory), EPROM (erasable, programmable ROM), EEPROM (electrically erasable, programmable ROM), and magnetic or optical disks or tapes. Exemplary computer readable signals, whether modulated using a carrier or not, are signals that a computer system hosting or running the present invention can be configured to access, including signals downloaded through the Internet or other networks. Concrete examples of the foregoing include distribution of executable software program(s) of the computer program on a CD-ROM or via Internet download. In a sense, the Internet itself, as an abstract entity, is a computer readable medium. The same is true of computer networks in general.

## Claims

1. A method for scheduling for a device, the method comprising:
receiving at least one parameter related to an initiation of an overwrite operation;
determining a temporal start based on the at least one parameter;
storing the temporal start; and
initiating the overwrite operation in response to a timer matching the temporal start.

2. The method of claim 1, further comprising
displaying a scheduling interface configured to receive the at least one parameter.

3. The method of claim 2, wherein the scheduling interface is configured to comprise a start time field, a date field, and a recurrence field.

4. The method of claim 3, further comprising:
receiving associated values for the time start field, the date field and the recurrence field; and
calculating the temporal start based on the associated values for the time start field, the date field and the recurrence field.

5. The method of claim 1, wherein the receiving at least one parameter related to an initiation of an overwrite operation occurs over a network using Simple Network Management Protocols.

6. The method of claim 1, wherein the receiving at least one parameter related to an initiation of an overwrite operation occurs over a network using Hyper Text Transfer Protocols.

7. The method of claim 1, wherein the overwrite operation comprises writing a set of overwrite codes on a storage medium.

8. The method of claim 1, further comprising:
accessing a network representation of the device;
displaying a list of properties associated with the network representation of the device in response to activation of the network representation of the device; and
requesting authentication information in response to activating one property on the list of properties associated with the network representation of the device.

9. The method of claim 8, further comprising verifying the authentication information.

10. A system for scheduling an overwrite operation on a device, the system comprising:
a processor configured to execute functionality of the device;
a storage medium configured to store data and interface with the processor; and;
an overwrite module configured to be executed by the processor that initiates an overwrite operation on the storage medium, wherein the overwrite module is also configured to display a first user interface configured to access the overwrite module; display a second user interface configured to receive at least one parameter that determines the initiation of the overwrite operation; and configured to execute the overwrite operation according to the at least one parameter.
